# EUROPEAN PATENT APPLICATION

(11) **EP 1 978 338 A2**
(43) Date of publication of application: **08.10.2008**
(21) Application number: 08251280.7
(22) Date of filing: 01.04.2008
(51) Int. Cl.: G01F 11/26, G01F 15/00

(54) **Spirits dispenser recording device**

(30) Priority: 02.04.2007 GB 0706380
(71) Applicant: Morgan, Stephen, 60 Woodhouse Road Guisborough Cleveland TS146LH (GB)
(72) Inventor: Morgan, Stephen, 60 Woodhouse Road Guisborough Cleveland TS146LH (GB)

(57) **Abstract**

A device to monitor by electronic means, the dispensing activity of a spirits measure and to provide data relating to the unique identity of the spirits measure provided by an electronic device or circuit affixed to the spirits measure as part of a system designed to record the activity of more than one spirits measure. Also to collect data relating to when the spirits measure is attached or removed from its mounting bracket. The invention may include a sensor engineered to fit onto or alternatively replace a standard spirits measure clamp. The device may be designed for use with Gaskell & Chambers OPtic Pearl type spirits measures or similar. The device may communicate collected data by digital radio transmission. The device may be battery powered.

## Description

This invention relates to an electronic device that detects when a measured quantity of liquid has been dispensed from a spirit measure commonly known as optic.

Optics are widely used throughout the world in pubs and bars for dispensing spirits and other liquids in precisely measured amounts. They are named so because they consist of a manually operated valve and a measuring chamber that is optically transparent so that the user can see that the chamber is full before dispensing takes place. Although the term is used generically in the licensed trade, the term OPTIC is in fact a trademark of Gaskell and Chambers Ltd. Optics are designed to be pushed into the neck of the bottle forming a tight seal, they attach to a bracket that is usually wall mounted, the bracket holds the bottle and the optic. The part of the bracket that locks the optic in position is a standard pattern that varies little in design, functionality and dimension from one manufacturer to another.

In recent years there have appeared a number of electronic systems designed to monitor the dispensing of all types of drinks with a view to providing greater stock control.

Existing optic sensors to date have been simple devices consisting of a magnet attached to some moving part of the optic that operates a magnetically operated switch, known as a reed switch, when a measure is dispensed. Other devices are simple switches that are operated mechanically. The problems with these types of devices are that they are easily defeated by persons wishing to do so and, they are unreliable in as much as they can give false readings if the optic is carelessly operated. The data that they can provide is very limited. Also, they normally require an individual cable for each sensor which can become bulky when many sensors are involved.

Alternatively, some manufacturers have made optics with internal sensors integrated into the body of the optic at the time of manufacture.

This invention related to a device as described in paragraph 1 above that is designed specifically to be operated in conjunction with an optic currently manufactured by Gaskell & Chambers Ltd, model 'Optic Pearl' U.K. Registered Design Number 1036078 and any similar variation of the same design and any copy of the design by another manufacturer, hereinafter referred to as 'the optic'.

An object of this invention is to provide a device that can be fitted in close proximity to the abovementioned optic by attaching it to a standard optic bracket or constructing the device so that it also functions as the optic bracket. Another object is to provide an accurate means of detecting when the optic has been used to dispense a measure of liquid by measuring the movement of a component part of the optic. Another object is to provide a means of detecting the presence of the optic. Another object is to provide a means of data communication to another electronic device whereby two or more devices can share the same communications medium

Preferably the method of detecting the movement of the component part of the optic shall be by magnetic reed switch reacting to the magnetic field of a magnet affixed to the surface of the part that moves towards the switch when the optic valve is in the open position. In another embodiment of the invention, the same moving part could be detected by mechanical switch, hall-effect sensor or a sensor that reacts to light reflected from a reflector affixed to the moving part or a proximity sensor that reacts to a metal object affixed to the moving part.

Preferably the method for sensing the presence of the optic shall be by means of electrical contacts that provide an electrical connection between a circuit board mounted on the optic that contains an electronic device which gives the optic a unique identity, and the optic sensor-bracket. When the optic is removed from the bracket the electrical connection is broken. In another embodiment of this invention, sensing the presence of the optic could be achieved by using a visible or infra-red light source, by mechanical switch, magnetic switch, or hall effect sensor reacting to a magnet affixed to the body of the optic situated so that the light beam or magnetic field is lost when the optic is removed or vice versa. Similarly a proximity sensor reacting to a metal object affixed to the body of the optic could also be used to achieve the same in yet another embodiment of this invention.

Preferably the device shall incorporate a micro-controller or some other electronic circuit to collect data from the sensors which detect the optic dispense action and the optic's presence and identity. In another embodiment of this invention; any one, or any combination of sensing; dispense action, optic presence or optic identity may exist.

Preferably the micro-controller or other electronic circuit shall be programmed in such a way as to differentiate between a full dispensing action an a partial dispensing action or a false input caused by a brief lowering of the valve mechanism (as can occur occasionally due to careless use). In another embodiment of this invention any one or a combination of the above may exist.

Preferably the micro-controller or other electronic circuit shall facilitate the data transmission to another electronic device using digital data transmission. In another embodiment of this invention; the data could be transmitted by other forms of transmission media such as fibre-optical, infra-red or by wires.

A preferred embodiment of the invention will now be described with reference to the accompanying drawings.

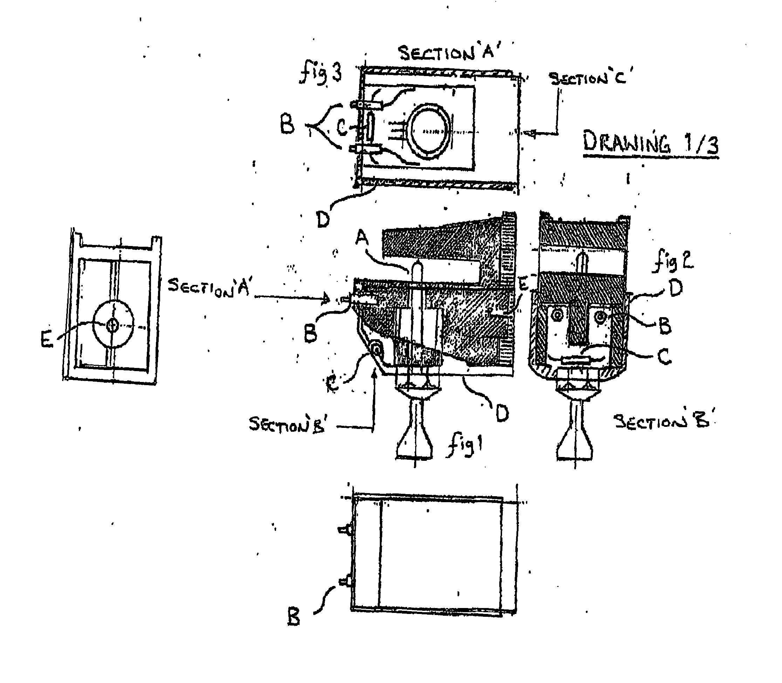

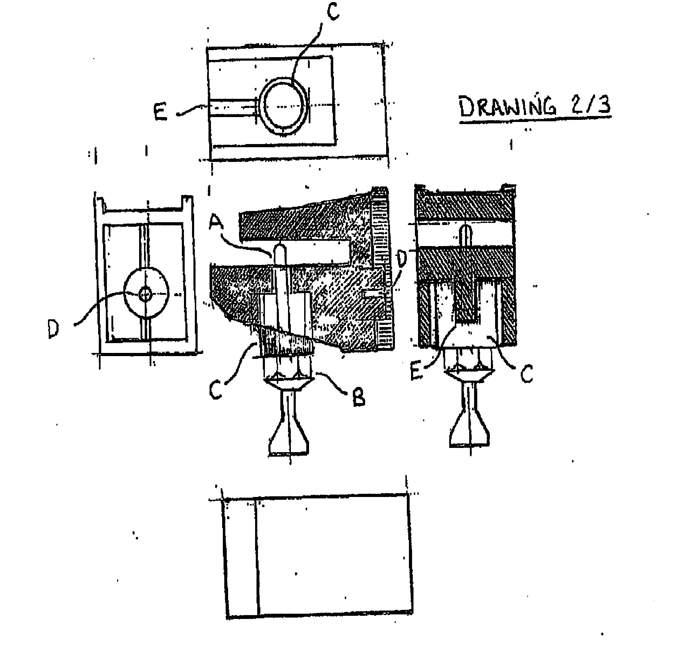

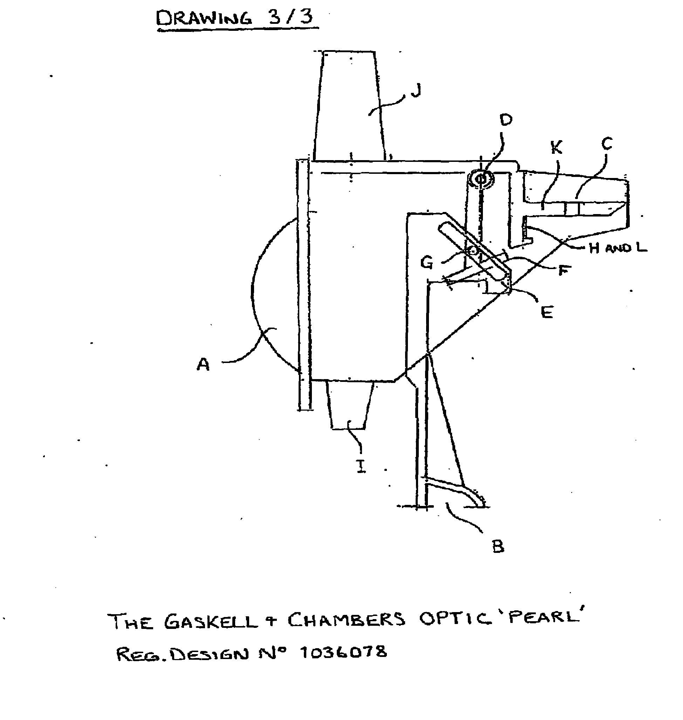

Drawing 1/3 shows three views of the sensor attached to the optic clamp. Figure **1** is a side view section, shown as Section 'C' showing the positioning of the sensor and its component parts. Figure 2 is a front view section of the same, shown as Section 'B' and figure 3 is a top view section of the same shown as Section 'A'. The components are as follows; b) electrical spring contact c) reed switch d) sensor housing

Drawing 2/3 is a drawing of the optic clamp which affixes to the wall bracket, whilst it is not a part of the invention it is given for clarity because the preferred embodiment of the invention is engineered to fit within and around the optic clamp.

The index is as follows; a) locating slot b) locking pin assembly c) threaded barrel d) fixing point e) centre strengthening ridge.

Drawing 3/3 is a drawing of the Gaskell and Chambers 'OPTIC pearl' type spirits dispenser and the component parts relevant to this invention which are; a) measuring chamber b) dispense lever c) locking hole d) pivot e) slot rear surface of valve operating lever (surface *f)* there is a small magnet affixed to this surface that is not shown. g) pinion h) rear wall (*surface h*) with identity printed circuit board (L) attached i) pouring spout j) bottle seal k) locating plate.

The 'sensing components of the invention; the electrical sprung contact and reed switch, are housed within a plastic moulding that has been precision engineered to fit into and around the optic clamp. The sprung contacts and the reed switch are facing forward, these are connected by thin wires to a small enclosure that is affixed to the side of the optic bracket (not shown). The enclosure contains batteries to power the device and a circuit board containing the micro-controller and other circuits necessary for the device to work, radio transmitter and antenna.

The OPTIC is attached to the bracket by inserting the locating plate into the locating slot in the optic clamp until the locking pin passes through the locking hole. In this position the spring contacts make connection with conductive pads on the printed circuit board (PCB) which is affixed to *surface h* on the Gaskell & Chambers OPTIC, The PCB has a circuit designed to provide a unique electrical signal to the micro-controller via the spring contacts and associated wiring. This signal is used to inform the micro-controller of the individual identity of the attached optic and also of the presence of the optic. When a liquid measure is dispensed by moving the dispense lever upwards, this causes the valve operating lever to pivot and *surface f* moves towards the reed switch. The magnet affixed to *surface f* operates the reed switch as it moves forward and releases the same switch when it withdraws as the dispense lever is released and the valve closes. When the reed switch changes from open to closed; the micro-controller records one measure has been dispensed. The measure is dependent upon the volume of the measuring chamber. This information is in turn transmitted by wireless to a remote receiving device that stores the data from numerous optics until required.

## Claims

1. A device designed to monitor by electronic means the dispensing activity of a spirits measure and to provide electronic data relating to the unique identity of the spirits measure by way of an electronic device or circuit affixed to the body of the spirits measure being part of a system designed to record the activity and status of more than one spirits measure.

2. A device according to claim 1, whereby monitoring the dispensing activity of a spirits measure as well as data relating to its identity and also data relating to whether the spirits measure is attached or detached from its mounting bracket is facilitated by way of a component moulded in such a way as to fit onto a standard spirits measure clamp as described and detailed in drawing 1/3 incorporating electrically conductive spring contacts to connect with the electronic identity device and a magnetic field sensing device which in the preferred embodiment of the invention is a reed switch but may instead be a hall effect switch.

3. In an alternative embodiment of the invention according to claims 1 and 2, whereby monitoring the dispensing activity of a spirits measure as well as data relating to its identity and also data relating to whether the spirits measure is attached or detached from its mounting bracket, may be facilitated by way of a component designed in such a way as to replace the standard clamp as described and detailed in drawing 1/3 while maintaining the same mechanical functionality, incorporating electrically conductive spring contacts to connect with the electronic identity device and a magnetic field sensing device which in the preferred embodiment of the invention is a reed switch but may instead be a hall effect switch.

4. In an alternative embodiment of the invention according to claims 1,2 and 3, in order to detect the presence of the spirits measure, the electrically conductive spring contacts may be replaced by a light emitter and associated receiver or any proximity detector or a mechanically operated switch or another reed switch.

5. A spirits dispenser monitoring device according to any of the preceding claims, in which the spirits measure so described may be the OPtic Pearl type currently manufactured by Gaskell & Chambers limited, registered design number 1036078 as described and detailed in drawing 3/3 or any similar variation of the same design or any copy of the design by any manufacturer.

6. A spirits dispenser monitoring device according to any of the preceding claims whereby the data so described is communicated to another electronic device by digital radio transmission.

7. In an alternative embodiment of the invention according to claim 6, communication of data to another electronic device may be via fibre optical cable, infra red light or by wires.

8. A spirits dispenser monitoring device according to any of the preceding claims whereby the electronic circuits are powered by batteries.
